# EUROPÄISCHE PATENTSCHRIFT

(11) **EP 2 246 577 B1**
(45) Veröffentlichungstag und Bekanntmachung des Hinweises auf die Patenterteilung: **05.10.2011**
(21) Anmeldenummer: 10161545.8
(22) Anmeldetag: 30.04.2010
(51) Int. Cl.: F16B 37/04

(54) **Befestigungselement**
Fastening element
Elément de fixation

(30) Priorität: 30.04.2009 DE 102009019345
(43) Veröffentlichungstag der Anmeldung: 03.11.2010
(73) Patentinhaber: Wagner & Co. Solartechnik GmbH, 35091 Cölbe (DE)
(72) Erfinder: Geisel, Udo, 35282, Rauschenberg (DE)
(74) Vertreter: Buchhold, Jürgen

(56) Entgegenhaltungen:
- EP-A1- 1 426 633
- EP-A1- 1 426 634
- DE-T2- 69 723 643
- DE-U1- 29 513 990

## Beschreibung

Die Erfindung betrifft ein Befestigungselement gemäß dem Oberbegriff von Anspruch 1.

Befestigungselemente zur Befestigung von Bauteilen an einer einen Montageschlitz aufweisenden Montageschiene sind allgemein bekannt. Sie sind üblicherweise einerseits im Montageschlitz der Montageschiene und andererseits am zu befestigenden Bauteil festlegbar. Ihren Einsatz finden solche Befestigungselemente typischerweise, wenn Bauteile mit Hilfe der Montageschienen an Wänden, Decken, auf Dächern oder ähnlichen Flächen montiert werden sollen. Entsprechende Montageschienen haben dazu üblicherweise einen Montageschlitz, der von zwei Seitenflanken begrenzt wird und die von dem Befestigungselement hintergriffen werden können, so dass das Befestigungselement an der Montageschiene verankert ist.

Problematisch ist es dabei, wenn mehrere Befestigungselemente gleichzeitig ein Bauteil an einer schrägen oder gar vertikalen Schiene halten sollen. Bei der Montage ist es nämlich meist notwendig, zunächst alle Befestigungselemente zu positionieren, dann eine Feinausrichtung vorzunehmen und die Befestigungselemente erst ganz zum Schluss endgültig zu fixieren. Gerade bei der Montage an schrägen oder vertikalen Schienen besteht dabei jedoch die Gefahr, dass die zunächst locker in der Schiene positionierten Befestigungselemente verrutschen, was die Montage unpräzise und schwierig gestalten kann.

Um dem zu begegnen sieht die DE 295 13 990 U1 eine Anordnung zur Befestigung einer Rohrleitung an einer Wand vor. Diese hat ein Befestigungselement, das aus einem Bolzen, einem am Bolzen angebrachten Hammerkopfelement, einem Stützelement und einer zwischen dem Stützelement und einem Kopfabschnitt des Bolzens angeordneten Feder besteht. Durch die Spannkraft der Feder wird das Hammerkopfelement im nicht montierten Zustand gegen die Unterseite des Stützelementes gedrückt. Soll das Befestigungselement nun an einer Montageschiene mit einem Montageschlitz angebracht werden, so wird das Hammerkopfelement in den Montageschlitz eingesetzt. Dabei liegt das Stützelement auf den Seitenflanken der Montageschiene auf. Durch Drücken auf den Bolzen entgegen der Federkraft kann das Hammerkopfelement dann in den Innenraum der Montageschiene gelangen, wo es um 90° verdreht werden kann. Wird der Bolzen nun wieder losgelassen, drückt die Feder das Hammerkopfelement zurück in Richtung des Stützelementes. Dadurch werden die Seitenflanken der Montageschiene zwischen dem um 90° verdrehten Hammerkopfelement und dem Stützelement eingeklemmt. Das Befestigungselement ist auf diese Weise an der Montageschiene vorfixiert und kann nicht mehr verrutschen. Um ein Überdrehen des Hammerkopfes zu vermeiden, ist der Hammerkopf so gestaltet, dass er beim Erreichen der gewünschten Klemmposition einen Anschlag findet.

Diese Lösung hat jedoch mehrere Nachteile. So ist es beispielsweise nötig, den Bolzen während des Drehens des Hammerkopfes gedrückt zu halten. Dementsprechend muss der Monteur in zwei Richtungen gleichzeitig Kraft ausüben, nämlich einerseits beim Drücken in Richtung der Schiene und andererseits beim Drehen um die Achse des Bolzens, was umständlich und wenig ergonomisch ist. Darüber hinaus ist durch den Anschlag des Hammerkopfelementes eine bestimmte Richtung beim Verdrehen vorgegeben, was die Montage je nach der Drehrichtung für Links- bzw. Rechtshänder erschweren kann. Auch kann es dazu kommen, dass das Hammerkopfelement beim Loslassen des Bolzens unbeabsichtigt wieder zurückgedreht wird, so dass das Befestigungselement wieder locker in der Montageschiene sitzt und verrutschen kann. Dadurch wird jedoch die Montage wiederum unzuverlässig.

Aufgabe der Erfindung ist es daher diese und andere Nachteile des Standes der Technik zu beseitigen und ein Befestigungselement zur Befestigung von Bauteilen an einer einen Montageschlitz aufweisenden Montageschiene zu schaffen, das schnell, einfach und zuverlässig montiert werden kann. Das Befestigungselement soll darüber hinaus mit einfachen Mitteln und kostengünstig herstellbar sein.

Hauptmerkmale der Erfindung sind im kennzeichnenden Teil von Anspruch 1 angegeben. Ausgestaltungen sind Gegenstand der Ansprüche 2 bis 16.

Bei einem Befestigungselement zum Befestigen von Bauteilen an einer einen Montageschlitz aufweisenden Montageschiene, wobei der Montageschlitz von zwei Seitenflanken begrenzt wird, umfassend einen Bolzen, ein mit dem Bolzen verbundenes Hammerkopfelement, ein Stützelement und eine Feder, die sich zwischen dem Stützelement und einem am Bolzen ausgebildeten Kopfabschnitt abstützt, wobei das Hammerkopfelement in einer Montageposition in den Montageschlitz der Montageschiene einsetzbar und entgegen der Feder in die Montageschiene eindrückbar ist und wobei das Hammerkopfelement derart zwischen der Montageposition und einer Klemmposition verschwenkbar ist, dass das Hammerkopfelement in der Klemmposition die Seitenflanken des Montageschlitzes hintergreift, sieht die Erfindung vor, dass das Stützelement beim Eindrücken des Hammerkopfelementes in die Montageschiene ein Drehmoment auf das Hammerkopfelement ausübt.

Diese Lösung bietet den besonderen Vorteil, dass während der Montage keine zusätzliche Drehbewegung ausgeführt werden muss. Das Befestigungselement wird einfach an den Montageschlitz angesetzt und das Hammerkopfelement durch Drücken entgegen der Kraft der Feder in die Montageschiene hinein gedrückt. Dadurch dass das Stützelement erfindungsgemäß ein Drehmoment auf das Hammerkopfelement ausübt, verdreht sich das Hammerkopfelement - der Richtung des Drehmomentes folgend - und hintergreift automatisch die Seitenflanken des Montageschlitzes. Man erkennt, dass das Hammerkopfelement durch das Drehmoment von der Montageposition in die Klemmposition verschwenkt wird.

Um ein Drehen über die gewünschte Klemmposition hinaus zu verhindern, ist es sinnvoll, dass die Schwenkbewegung des Hammerkopfelementes von der Montageposition in die Klemmposition innerhalb der Montageschiene begrenzt ist. So ist beispielsweise denkbar, dass das Hammerkopfelement bei Erreichen der Klemmposition einen Anschlag findet. Einen solchen Anschlag kann beispielsweise die Wandung der Montageschiene darstellen. Es kann sich aber auch um ein am Stützelement ausgebildetes Bauteil handeln. Mithin ist sowohl denkbar, dass die Wandung der Montageschiene der Anschlag ist als auch, dass der Anschlag am Stützelement ausgebildet ist. Selbstverständlich kann auch an der Wandung ein zusätzlicher Anschlag beispielsweise in Form einer Verengung oder eines Vorsprungs ausgebildet sein.

Jedenfalls ist es günstig, wenn das Hammerkopfelement beispielsweise so gestaltet ist, dass es zwei kurze und zwei lange Seitenflächen aufweist, wobei jede Seitenfläche an ihrem einen Ende über eine Rundung und an ihrem anderen Ende über eine Ecke mit der jeweils angrenzenden Seitenfläche verbunden ist. Insgesamt sind die Abmessungen des Hammerkopfelementes dabei so gewählt, dass die Länge der langen Seitenflächen der inneren Breite der Montageschiene entspricht. Beim Verschwenken des Hammerkopfelementes innerhalb der Schiene können dann die gerundeten Ecken an den inneren Seitenwänden der Montageschiene - bei denen es sich wie oben beschrieben um einen Anschlag handeln kann- vorbei gleiten. Die nicht-gerundeten Ecken, schlagen jedoch an den inneren Seitenwänden der Montageschiene an sobald das Hammerkopfelement die Klemmposition - nämlich eine Position bei der die langen Seiten quer zum Montageschlitz verlaufen und bei der die langen Seiten gerade parallel zur Breite des Montageschlitzes abgeordnet sind - erreicht.

Vorteilhaft sind also die Rundungen in Richtung der Wirkung des Drehmomentes ausgebildet und die Länge des Hammerkopfelementes ist derart bemessen, dass die Rundungen an den Innenseiten der Montageschiene vorbei gleiten und die Ecken beim Erreichen der Klemmposition einen Anschlag an der Innenseite der Montageschiene finden.

Man erkennt insgesamt, dass die Klemmposition des Hammerkopfelementes durch einen in der Schwenkrichtung am Stützelement und/oder an der Wandung der Montageschiene ausgebildeten Anschlag vorbestimmt sein kann.

Das Stützelement weist zweckmäßig wenigstens einen Halteflügel auf, der im montierten Zustand auf den Seitenflanken des Montageschlitzes aufliegt. Günstig ist es außerdem, wenn an dem Stützelement eine Verdrehsicherung ausgebildet ist. Diese stellt sicher, dass das Stützelement seine Position an der Montageschiene bei der Ausübung des Drehmomentes auf das Hammerkopfelement beibehält. Dazu ist es vorteilhaft, wenn die Verdrehsicherung in den Montageschlitz eingreift.

Man erkennt außerdem, dass das Hammerkopfelement mit Vorteil in der Montageposition durch die Verdrehsicherung festgehalten wird. Das Hammerkopfelement gelangt so beim Einsetzen des Befestigungselementes in die Montageschiene bereits in einer definierten Position in den Montageschlitz. Ein Ausrichten des Hammerkopfelementes in der Montageschiene vor dem Auslösen des Drehmomentes ist nicht notwendig. Stattdessen kann das Hammerkopfelement im Vorfeld der Montage derart am Befestigungselement ausgerichtet werden, dass das Stützelement dank der Verdrehsicherung nur in einer und zwar der gewünschten Position in die Montageschiene einsetzbar ist. Befindet sich das Hammerkopfelement nicht in der Montageposition, so versperrt es das Einsetzen des Stützelementes in den Montageschlitz. Ist das Hammerkopfelement dagegen in der Montageposition durch die Verdrehsicherung festgehalten gelangt auch das Hammerkopfelement automatisch in die korrekte Montageposition - selbst beim blinden Einsetzen des Befestigungselementes in die Montageschiene. Man erkennt, dass das Befestigungselement besonders vorteilhaft auch für Montagen eingesetzt werden kann, bei denen der Monteur - beispielsweise durch die Ausmaße des zu montierenden Bauteils - keine direkte Sicht auf die Montageschiene hat.

Zweckmäßig weist die Verdrehsicherung wenigstens ein erstes Sicherungselement und wenigstens ein zweites Sicherungselement auf. Dabei können beispielsweise jeweils ein erstes Sicherungselement und ein zweites Sicherungselement an einer gemeinsamen Seitenkante des Stützelementes ausgebildet sein. Günstig ist es dann, wenn die an einer gemeinsamen Seite des Stützelementes ausgebildeten ersten und zweiten Sicherungselemente einander in einem Abstand gegenüberliegen, der der Breite des Montageschlitzes entspricht. Um das Hammerkopfelement wie oben beschreiben festzuhalten, kann das Hammerkopfelement in der Montageposition in Richtung des Montageschlitzes zwischen den ersten und zweiten Sicherungselementen angeordnet sein. Dabei ist es beispielsweise denkbar, dass das erste Sicherungselement eine Federzunge ist, wobei die Federzunge einen mit dem Stützelement verbundenen vertikalen Abschnitt und einen Schenkel aufweist, der das Hammerkopfelement in der Montageposition untergreift. Der vertikale Abschnitt geht an einer Beuge in den Schenkel über. Das Hammerkopfelement liegt in der Montageposition mit wenigstens einer Kante an der Beuge an. Beim Drücken entgegen der Federkraft gleitet es entlang der Beuge abwärts. Diese drückt den Schenkel nach unten und zur Seite, wodurch die Federzunge erfindungsgemäß ein Drehmoment auf das Hammerkopfelement ausübt.

Man erkennt somit, dass es von Vorteil ist, wenn jedes erste Sicherungselement einen Schenkel aufweist, der das Hammerkopfelement in der Montageposition untergreift und wenn das erste Sicherungselement das Drehmoment auf das Hammerkopfelement ausübt. Denkbar ist dabei auch, dass im Bereich der Ecken am Hammerkopfelement Halteausnehmungen ausgebildet sind, wobei die Halteausnehmungen in der Montageposition des Hammerkopfelementes an den vertikalen Abschnitten der Federzungen und die Rundungen an den zweiten Sicherungselementen anliegen.

Ein weiterer Vorteil ist dadurch gegeben, dass die Schenkel der Federzungen in der Klemmposition eine Verdrehsicherung für das Hammerkopfelement bilden. Auf diese Weise können sie als zusätzliche Sicherung dienen, wenn das Befestigungselement beabsichtigt oder unbeabsichtigt in der bereits verklemmten Position erneut entgegen der Federkraft gedrückt wird. Dies kann beispielsweise der Fall sein, wenn die Verschraubung von Bauteilen bei der Demontage wieder gelöst werden soll oder wenn die Befestigungselemente nach einer ersten Vormontage in die endgültige Position gebracht werden sollen. So ist der Anschlag den das Hammerkopfelement bei der Montage in der Klemmposition findet, in der Regel in Richtung der späteren Schraubbewegung ausgebildet, die ausgeübt wird, um das Bauteil nach dem vorläufigen Fixieren durch das Festklemmen endgültig an der Montageschiene zu befestigen. Bei der Demontage wird entsprechend eine entgegengesetzte Schraubbewegung ausgeführt und es besteht die Gefahr, dass das Hammerkopfelement entgegen der ursprünglichen Verschwenkrichtung früher als gewollt in die Montageposition zurückgelangt. Dem stehen jedoch erfindungsgemäß die schräg verlaufenden Schenkel der Federzungen entgegen. Das Hammerkopfelement ist nämlich in der Klemmposition derart zwischen diesen Schenkeln angeordnet, dass es sich zwar zu einem gewissen Grad zwischen ihnen verdrehen kann. Bei einer größeren Schwenkbewegung in Richtung der Montageposition schlägt es jedoch entweder am Anschlag der Klemmposition an oder es trifft mit seinen langen Seitenkanten auf die Seiten der schrägen Schenkel der Federzungen, also der ersten Sicherungselemente. Mithin ist das Verschwenken des Hammerkopfelementes von der Klemmposition in die Montageposition gesperrt ist.

Bei alledem ist es zweckmäßig, wenn das Hammerkopfelement eine Hammerkopfmutter ist, die mit dem Haltebolzen durch ein Gewinde verbunden ist. Weiter kann an dem Stützelement eine Führung für den Bolzen und an dem Stützelement eine Halterung für die Feder ausgebildet sein. Vorteilhaft ist es dabei, wenn die Führung für den Bolzen die Halterung für die Feder bildet. Dies ist insbesondere dann der Fall, wenn die Führung für den Bolzen einen auf der Hauptfläche des Stützelementes aufsitzender Kragen ist, der eine im Stützelement ausgebildete Ausnehmung durch die der Bolzen gesteckt wird umgibt. Der Bolzen wird dann in der Innenseite des Kragens geführt. Gleichzeitig kann die Feder an der Außenseite des Kragens anliegen und so ebenfalls durch den Kragen in der gewünschten Position gehalten werden.

Man erkennt, dass das Stützelement als ein einfaches Stanzteil beispielsweise aus einem mehr oder weniger rechteckigen Blechstück gefertigt werden kann. Beim Stanzen des Blechstücks werden dazu einfach die ersten und zweiten Sicherungselemente nach unten in Richtung des Montageschlitzes gebogen. Die Führung für Bolzen und Feder entsteht, wenn die Ausnehmung zur Aufnahme des Bolzens derart von unten eingestanzt wird, dass die Ränder des Stanzloches den besagten Kragen bilden. Man erkennt dass auf diese Weise außerdem nahezu kein Materialverlust bei der Herstellung des Stützelementes auftritt - was ein weiterer Vorteil der Erfindung ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:

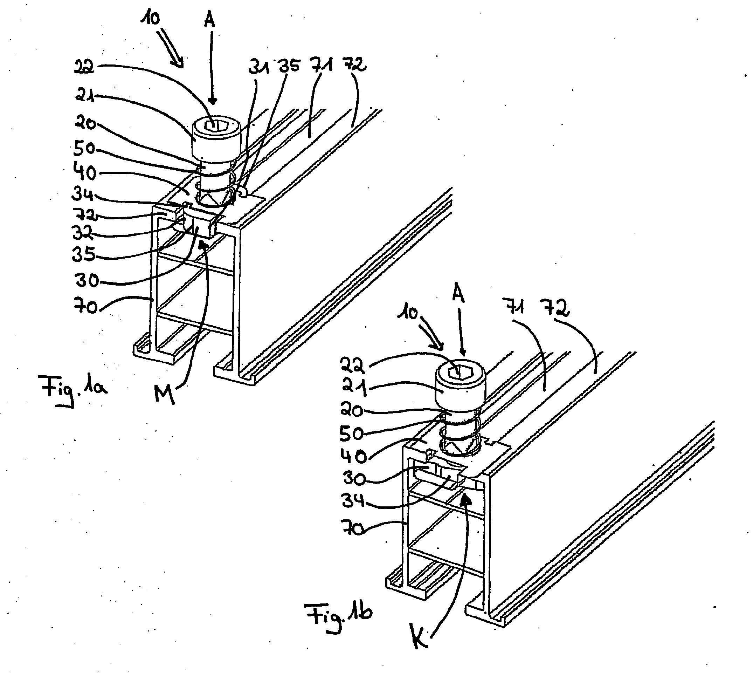

- Fig. 1 a: Ein erfindungsgemäßes Befestigungselement an einer Montageschiene in Montageposition;
- Fig. 1 b: das Befestigungselement aus Fig. 1a in Klemmposition;
- Fig. 2: ein erfindungsgemäßes Befestigungselement;
- Fig. 3: Detailansicht eines Stützelementes für ein erfindungsgemäßes Befestigungselement;
- Fig. 4a bis 4d: Bewegungsablauf des Befestigungselementes beim Drücken auf den Bolzen;
- Fig. 5a bis 5c: Ansicht des in den Figuren 4a bis 4d dargestellten Bewegungsablaufes von der Unterseite des Befestigungselementes betrachtet;
- Fig. 6a bis 6c: eine seitliche Ansicht des Bewegungsablaufes bei einem in den Montageschlitz einer Montageschiene eingesetzten Befestigungselement;
- Fig. 7: die Befestigung eines Bauteiles an einer Montageschiene mit Hilfe des erfindungsgemäßen Befestigungselementes.

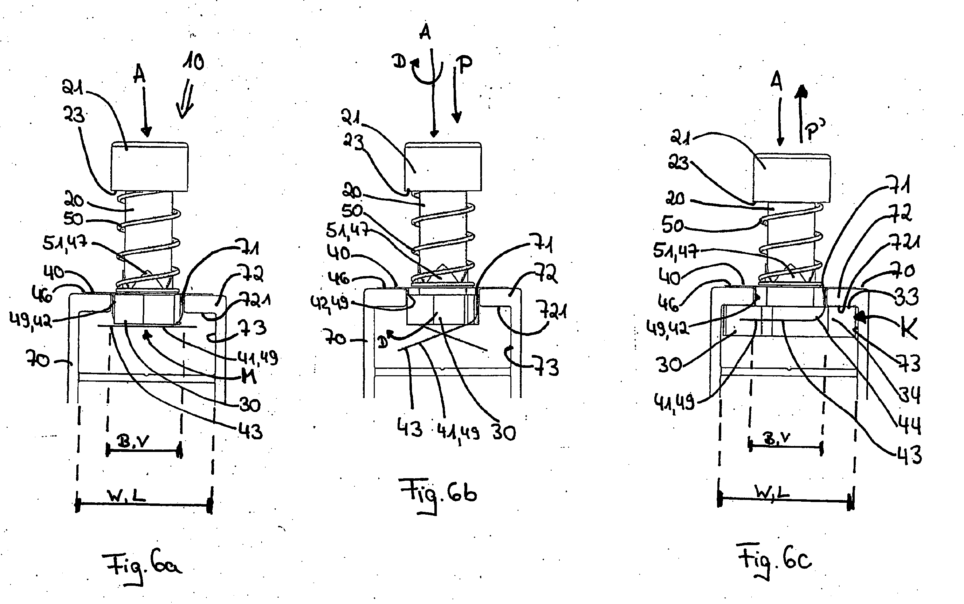

Die Figuren 1 a und 1 b zeigen jeweils eine Montageschiene 70 mit einem Montageschlitz 71, der durch zwei parallel verlaufende Seitenflanken 72 begrenzt ist. In den Montageschlitz 71 ist ein erfindungsgemäßes Befestigungselement 10 eingesetzt. Dieses besteht aus einem Bolzen 20, an welchem ein Kopfabschnitt 21 und ein Hammerkopfelement 30 ausgebildet sind, sowie einem Stützelement 40 und einer Feder 50. In dem Kopfabschnitt 21 ist eine Ausnehmung 22 ausgebildet, in welcher bei Bedarf ein Werkzeug angesetzt werden kann. Das Hammerkopfelement 30 ist ein im wesentlichen rechteckiges Bauteil, wobei die Breite B des Hammerkopfelementes 30 gleich oder geringer als die Breite V des Montageschlitzes 71, die Länge L des Hammerkopfelementes 30 gleich oder geringer als die Innenbreite W der Montageschiene 70 und die Länge L größer als die Breite B ist (siehe auch Figuren 6a und 6c). Denkbar ist beispielsweise, dass das Hammerkopfelement 30 eine Hammerkopfmutter ist, die auf den Bolzen 20 aufgeschraubt ist, der mit einem Gewinde ausgestattet sein kann. Vorteilhaft ist es, wenn das Hammerkopfelement 30 zwei lange Seiten 34 und zwei kurze Seiten 35 aufweist, wobei jede der Seiten 34, 35 an einem Ende über eine Rundung 32 und am anderen Ende über eine Ecke 31 mit den ihr benachbarten Seiten 35, 34 verbunden ist.

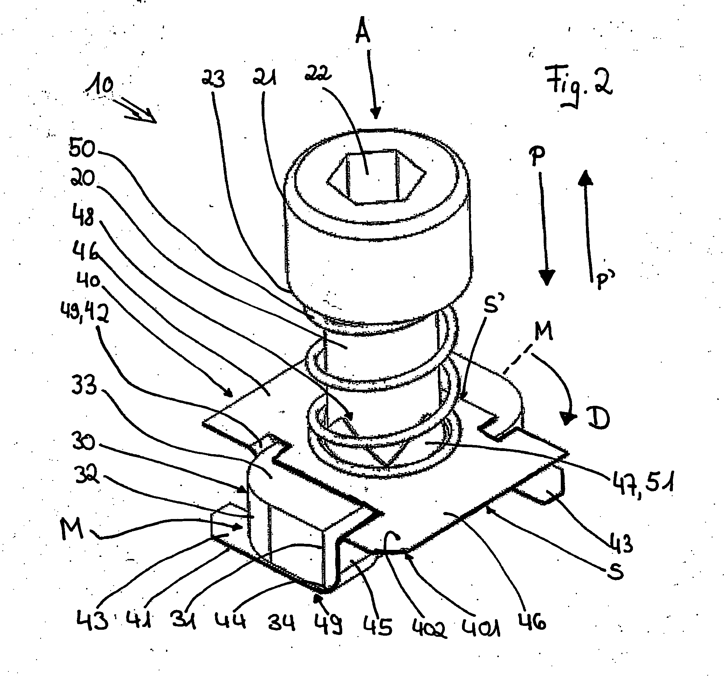

Man erkennt in Fig. 1a, dass sich das Hammerkopfelement 30 in einer Montageposition M befindet. Das heißt es ist derart in Bezug auf das Befestigungselement 10 und die Montageschiene 70 ausgerichtet, dass es in den Montageschlitz 71 eingesetzt werden kann. Die langen Seiten 34 (vgl. Figuren 2 und 6a bis 6c) des Hammerkopfelementes 30 verlaufen parallel zu den Seitenflanken 72 der Montageschiene 70. Das Befestigungselement 10 ist in der Montageschiene 70 verschiebbar.

In Fig. 1b befindet sich das Hammerkopfelement 30 dagegen in einer Klemmposition K. Das heißt die langen Seiten 34 (vgl. Figuren 2 und 6a bis 6c) des Hammerkopfelementes 30 verlaufen quer zu den Seitenflanken 72 und das Hammerkopfelement 30 hintergreift die Seitenflanken 72. Auf diese Weise ist das Befestigungselement 10 an der Montageschiene 70 festgeklemmt.

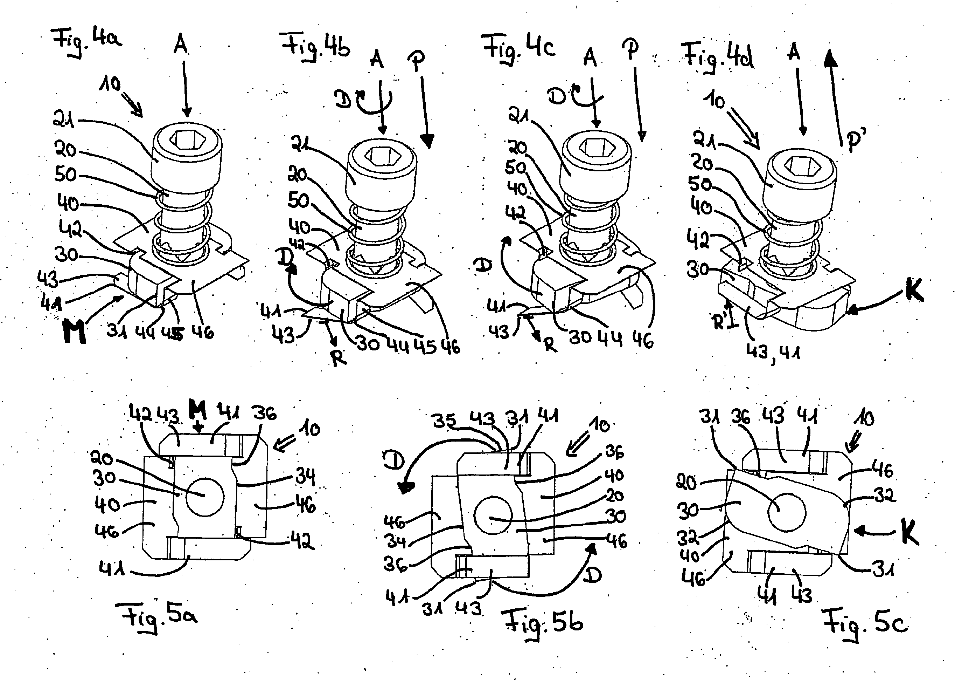

Die entsprechende Klemmkraft, die das Befestigungselement 10 in der Montageposition M an der Montagschiene 70 festhält, wird von der Feder 50 ausgeübt. So erkennt man in den Figuren 1 a und 1b, aber auch in Fig. 2 (sowie selbstverständlich auch in den Figuren 4a bis 4d und 6a bis 6c), dass es sich bei der Feder 50 beispielsweise um eine Schrauben-Druck-Feder handelt, die sich auf der einen Seite an dem auf der Montageschiene 70 aufliegenden Stützelement 40 und damit an der Montageschiene 70 abstützt. Auf der anderen Seite findet die Feder 50 einen Anschlag 23 am Kopfabschnitt 21 des Bolzens 20. Sie drückt dabei den Kopfabschnitt 21 des Bolzens 20 von dem Stützelement 40 und der Montageschiene 70 weg in Richtung P'. In der Folge wird das Hammerkopfelement 30 in Richtung die Unterseite 401 des Stützelementes 40 gezogen. Ist das Hammerkopfelement 30 dabei in der Montageposition M so kann es mit seiner dem Stützelement zugewandten Fläche 33 an der Unterseite 401 des Stützelementes 40 anliegen. Ist es dagegen in der Klemmposition K, findet es mit der Fläche 33 einen Anschlag an den Unterseiten 721 der Seitenflanken 72. Auf diese Weise werden die Seitenflanken 72 zwischen dem Hammerkopfelement 30 und dem Stützelement 40 eingeklemmt. Das Befestigungselement 10 ist somit an der Montageschiene 70 fixiert.

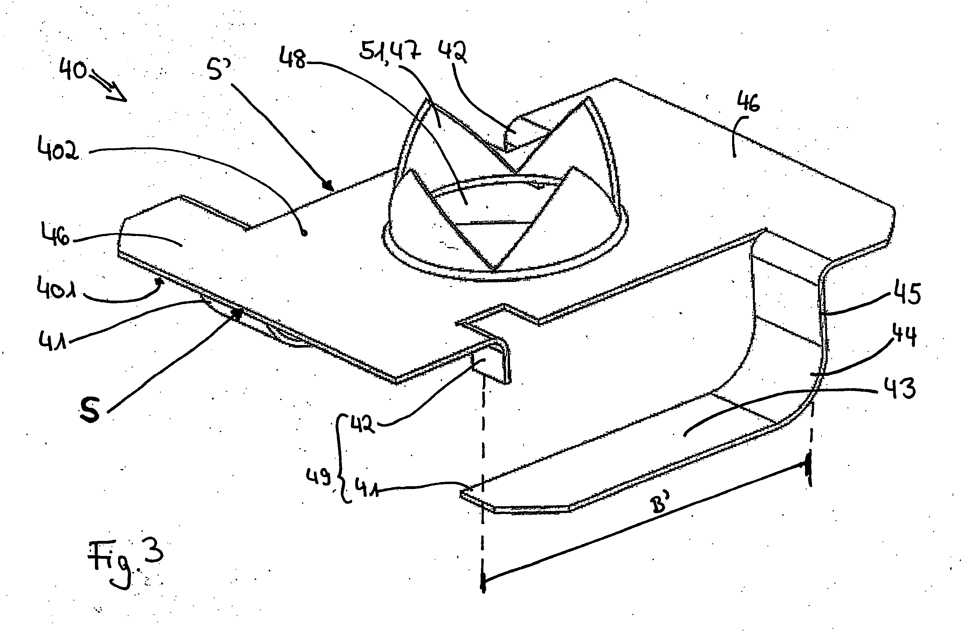

In den Figuren 2 und 3 erkennt man, dass das Stützelement 40 eine rechteckige Grundform hat mit jeweils zwei parallel zum Montageschlitz 71 verlaufenden Seiten S und zwei quer zum Montageschlitz 71 verlaufenden Seiten S'.

An den parallel zum Montageschlitz 71 verlaufenden Seiten S ist jeweils ein Halteflügel 46 ausgebildet der auf der Seitenflanken 72 des Montageschlitzes 71 aufliegen kann. In der Montageposition M verlaufen die langen Seiten 34 des Hammerkopfelementes 30 entsprechend parallel zu den Halteflügeln 46.

An den quer zum Montageschlitz 71 verlaufenden Seiten S' ist jeweils eine Verdrehsicherung 49 ausgebildet. Liegt das Stützelement 40 mit seinen Halteflügeln 46 auf den Seitenflanken 72 auf, so ragt die Verdrehsicherung 49 zwischen den Seitenflanken 72 in den Montageschlitz 71. Dabei ist es besonders vorteilhaft, wenn die Breite B' der Verdrehsicherung 49 der Breite V des Montageschlitzes 71 entspricht.

Man erkennt, dass die Verdrehsicherung 49 in einem bevorzugten Ausführungsbeispiel jeweils aus einem ersten Sicherungselement 41 und einem zweiten Sicherungselement 42 besteht. Diese verhindern, dass sich das Stützelement 40 sobald es auf der Montageschiene 70 aufliegt um eine Achse drehen kann, die parallel zur Achse A des Bolzens 20 - und somit parallel zur Richtung P und P' in der bei der Montage Druck auf die Feder 50 ausgeübt wird - verläuft.

Das erste Sicherungselement 41 kann beispielsweise die Gestalt einer Federzunge haben und aus einem ersten Abschnitt 45, der vertikal zur Hauptfläche des Stützelementes 40 in den Montageschlitz 71 ragt, und einem Schenkel 43 bestehen. Dabei geht der erste Abschnitt 45 an einer Beuge 44 in den Schenkel 43 über. Das zweite Sicherungselement 42 kann eine einfache Haltezunge sein.

Das Stützelement 40 hat außerdem eine Ausnehmung 48, durch welche der Bolzen 20 geführt ist. Die Ausnehmung 48 ist vorzugsweise in der Mitte des Stützelementes 40 angeordnet, so dass es über dem Montageschlitz 71 zu liegen kommt. An der Oberseite 402 des Stützelementes 40 ist die Ausnehmung 48 von einem Kragen 47, 51 umgeben, der sowohl eine Führung 47 für den Bolzen 20 als auch eine Führung 51 für die Feder 50 bildet. Dabei umgreift die Feder 50 den Kragen 47, 51 von außen, während der Bolzen 20 an der Innenseite des Kragens 47, 51 anliegt.

Die Figuren 4a bis 4d zeigen schrittweise den Bewegungsablauf, der stattfindet wenn das Hammerkopfelement 30 des Befestigungselementes 10 von der Montageposition M in die Klemmposition K verschwenkt wird.

In der Figur 4a befindet sich das Hammerkopfelement 30 dabei zunächst in der Montageposition M in einem Ruhezustand. Man erkennt, dass es dabei von dem Schenkel 43 des Stützelementes 40 untergriffen wird. Seine langen Seiten 34 liegen zwischen dem ersten Abschnitt 45 der ersten Sicherungselemente 41 und den zweiten Sicherungselementen 42, so dass das Hammerkopfelement 30 von den Sicherungselemente 41, 42 festgehalten wird und sich nicht selbstständig verdrehen kann.

In den Figuren 4b und 4c wird nun auf den Bolzen 20 in Richtung P eine Kraft ausgeübt. Diese ist entgegen der Kraft der Feder 50 ausgerichtet und drückt die Feder 50 zusammen. Gleichzeitig werden der Bolzen 20 und das Hammerkopfelement 30 in Richtung P geschoben. Dabei gleitet der Bolzen 20 durch die Ausnehmung 48 wobei seine Achse A mit Hilfe der Führung 47, 51 in einer stabilen Position gegenüber dem Stützelement 40 gehalten wird.

Wie oben beschrieben wird das Hammerkopfelement 30 in der Montageposition M zunächst von dem Schenkel 43 des ersten Sicherungselementes 41 untergriffen. Wird es nun in Richtung P gedrückt übt es seinerseits eine entsprechende Kraft auf den Schenkel 43 aus. Da das erste Sicherungselement 41 jedoch über die Beuge 44 fest mit dem ersten Abschnitt 45 und über diesen fest mit dem Stützelement 40 verbunden ist, kann es der auf das Hammerkopfelement 30 ausgeübten Kraft bzw. der Eindrückkraft nur dadurch begegnen, dass es mit dem Schenkel 43 in Richtung R schräg nach unten ausweicht. Man erkennt dabei nicht nur, dass das Hammerkopfelement 30 einen Druck in Richtung P auf das erste Sicherungselement 41 ausübt, sonder auch, dass das erste Sicherungselement 41, insbesondere der Schenkel 43 einen Gegendruck auf das Hammerkopfelement 30 ausübt. Da das Hammerkopfelement 30 jedoch wie oben beschreiben an dem Bolzen 20 montiert ist, ist die einzige Bewegung, mit der es dem Gegendruck ausweichen kann, eine Drehung um die Achse A des Bolzens 20. Dabei ist es durchaus denkbar, dass sich der Bolzen 20 ebenfalls um die Achse A dreht. Man erkennt, dass auf diese Weise das erste Sicherungselement 41 und mithin das Stützelement 40 ein Drehmoment in Richtung D auf das Hammerkopfelement 30 ausübt. Bei der durch das Drehmoment bewirkten Drehung um die Achse A gelangt das Hammerkopfelement 30 automatisch in die Klemmposition K. Dabei findet es - wie in Fig. 6c erkennbar und bei der Beschreibung der Figuren 6a bis 6c dargestellt - an der Wandung 73 der Montageschiene 70 einen Anschlag, der die Drehbewegung des Hammerkopfelementes 30 bei Erreichen der Klemmposition K stoppt. Auf diese Weise wird ein Drehen über die Klemmposition K hinaus und mithin das ungewollte erneute Erreichen einer Position verhindert, in der das Hammerkopfelement 30 aus der Montageschiene 70 herausziehbar wäre.

Man erkennt in Fig. 4d, dass die Schenkel 43 der ersten Sicherungselemente 41 zurück in die Ausgangsstellung federn, sobald das Hammerkopfelement 30 sich soweit gedreht hat, dass es nicht mehr von ihnen untergriffen wird. Das Hammerkopfelement 30 liegt nun wiederum zwischen den ersten Sicherungselementen 41, da die Schenkel 43 nun parallel zu den langen Seiten 34 des Hammerkopfelementes 30 verlaufen. Auf diese Weise hindern auch die Schenkel 43 das Hammerkopfelement 30 daran, sich über die Klemmposition K hinaus zu drehen.

Wird kein weiterer Druck in Richtung P auf den Bolzen 20 ausgeübt, so dehnt sich die Feder 50 wieder aus und drückt den Bolzen 20 wieder nach oben in Richtung P'. Dadurch wird das Halteelement 30 wiederum gegen die Unterseite 402 des Stützelementes 40 oder gegen die Unterseite 721 der Seitenflanken 72 gezogen. Der Schenkel 43 federt in Richung R' zurück in seine Ausgangsposition.

Die Figuren 5a bis 5c verdeutlichen den Ablauf des Verdrehens des Hammerkopfelementes 30 in einer Ansicht von unten in Richtung der Achse A des Bolzens 20. Man erkennt in allen drei Figuren, dass das Hammerkopfelement 30 an dem Bolzen 20 befestigt ist.

In Fig. 5a befindet sich das Hammerkopfelement 30 - entsprechend der in Fig. 4a gezeigten Ansicht - in der Montageposition M und wird von den Schenkeln 43 der ersten Sicherungselemente 41 untergriffen. An den langen Seiten 34 ist jeweils eine Ausnehmung 36 in dem untergriffenen Beriech des Hammerkopfelementes 30 ausgebildet.

In Fig. 5b wird in Richtung auf den Betrachter und analog zu den Figuren 4b und 4c Druck auf den Bolzen 20 ausgeübt, so dass die ersten Sicherungselemente 41 und mithin das Stützelement 40 ein Drehmoment auf das Hammerkopfelement 30 ausüben, welches eine Drehung in Richtung D bewirkt.

In Fig. 5c, welche der Situation in Fig. 4d entspricht, ist das Hammerkopfelement 30 außerhalb des Bereiches der ersten Sicherungselemente 41 gelangt und befindet sich in einer Klemmposition K. Man erkennt, dass es von Vorteil sein kann, wenn das Hammerkopfelement 30 derart an dem Bolzen 20 montiert ist, dass die Rundungen 32 in Richtung D der Drehung weisen. Das Hammerkopfelement 30 kann dann zunächst an einer Wandung 73 (vgl. Fig. 6a bis 6c), die beispielsweise parallel zu den Seitenkanten der Halteflügel 46 verläuft, vorbei gleiten. Die Drehung wird jedoch gestoppt, wenn die Ecken 31 an den Wandungen 73 anschlagen. Man erkennt, dass dies genau dann der Fall ist, wenn sich das Hammerkopfelement 30 in der Klemmposition K befindet. Man erkennt weiter, dass die zurückgefederten Schenkel 43 verhindern, dass sich das Hammerkopfelement 30 ungewollt entgegen der Richtung D aus der Klemmposition K zurückdreht.

Die Montage eines erfindungsgemäßen Befestigungselementes 10 erfolgt besonders schnell, einfach und zuverlässig in drei Schritten, wie in den Figuren 6a, 6b und 6c dargestellt.

Dabei wird das Befestigungselement 10 wird vor der Montage derart zusammengebaut und vorbereitet, dass sich das Hammerkopfelement 30 in der Montageposition M befindet und mithin von den Schenkeln 43 der ersten Sicherungselemente 41 untergriffen wird.

In Fig. 6a erkennt man nun, wie das Befestigungselement 10 im ersten Montageschritt in den Montageschlitz 71 eingesetzt wird. Dabei kommen die Halteflügel 46 des Stützelementes 40 auf den Seitenflanken 72 der Montageschiene 70 zu liegen. Das Hammerkopfelement 30 und die die Verdrehsicherung 49 bildenden ersten und zweiten Sicherungselemente 41, 42 liegen im Montageschlitz 71 zwischen den Seitenflanken 72. Das Befestigungselement 10 ist entlang des Montageschlitzes 71 verschiebbar und somit ausrichtbar.

Im zweiten Montageschritt wird - wie in Fig. 6b gezeigt und oben beschrieben - nun auf den Bolzen 20 ein Druck in Richtung P ausgeübt. Dadurch wird das Hammerkopfelement 30 gegen die Schenkel 43 gedrückt, die ihrerseits in Schrägstellung gelangen und - wie ebenfalls oben beschrieben - ein Drehmoment auf das Hammerkopfelement 30 ausüben. Sobald das Hammerkopfelement 30 so tief in den Montageschlitz 71 gedrückt ist, dass es an den Seitenflanken 72 vorbei bewegt werden kann, gibt es dem Drehmoment nach und wird dabei in Richtung D um die Achse A des Bolzens 20 verschwenkt. Dabei wird das Stützelement 40 und mit diesem der Bolzen 20 dank der Verdrehsicherungen 49 in der ursprünglichen Position festgehalten, so dass ein entgegen das Drehmoment gerichtetes Ausweichen des Stützelementes 40 erfolgreich verhindert wird. Gestoppt wird die Drehbewegung im gezeigten Ausführungsbeispiel dadurch, dass das Hammerkopfelement 30 an den inneren Wandungen 73 der Montageschiene 70 anschlägt, sobald es die Klemmposition K erreicht hat. Dieses Anschlagen kann ein für den Monteur hörbares Geräusch erzeugen, so dass er über eine zusätzliche Kontrollmöglichkeit darüber verfügt, ob dass Hammerkopfelement die gewünschte Position erreicht hat.

Der dritte - in Fig. 6c dargestellte - Montageschritt ist dann das Festklemmen des Befestigungselementes 10 an der Montageschiene 70. Sobald kein Druck in Richtung P mehr ausgeübt wird drückt die Feder 50 den Bolzen 20 wieder nach oben und das in der Klemmposition K befindliche Hammerkopfelement 30 gegen die Unterseite 721 der Seitenflanken 72. Gleichzeitig drückt die Feder 50 das Stützelement 40, insbesondere dessen Halteflügel 46, von außen auf die Seitenflanken 72 der Montageschiene 70. Auf diese Weise werden die Seitenflanken 72 mit Hilfe der Kraft der Feder 50 zwischen dem Stützelement 40 und dem Hammerkopfelement 30 eingeklemmt. Mithin ist das Befestigungselement 10 an der Montageschiene 70 fixiert. Man erkennt, dass ein ungewolltes Zurückdrehen des Hammerkopfelementes 30 bei der erfindungsgemäßen Lösung nicht möglich ist, da die Schenkel 43 in der Klemmposition K derart parallel zu den langen Seiten 34 des Hammerkopfelementes 30 liegen, dass das Hammerkopfelement 30 an diesen eine Anschlag finden würde, der die ungewollte Bewegung unterbindet.

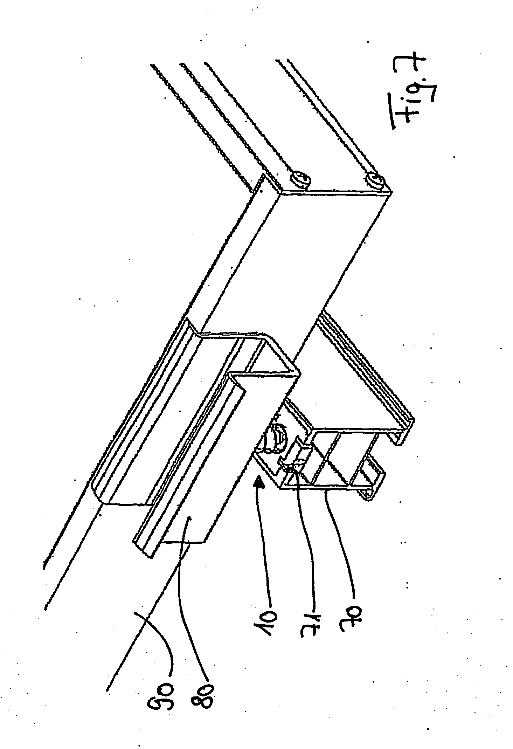

In Fig. 7 wird das erfindungsgemäße Befestigungselement 10 dazu verwendet, ein Bauteil 90, beispielsweise ein Panel einer Solaranlage an einer Montageschiene 70 blind zu montieren. Dazu wird üblicherweise zunächst die Montageschiene 70 in der gewünschten Position auf einem Dach, an einer Wand oder ähnlichen Fläche montiert. Das Panel 90 hat eine Halteschiene 80 an welcher üblicherweise eine Festlegungsmöglichkeit für den Bolzen 20 des Befestigungselementes 10 vorgesehen ist. Man erkennt dass das erfindungsgemäße Befestigungselement 10 nun die Montage des Panels an der Montageschiene 70 wesentlich erleichtert. So kann es beispielsweise in Vorbereitung der Montage an der Halteschiene 80 angebracht werden, diese ist für den Monteur gut einsichtig. Denkbar ist, dass beispielsweise zunächst der Bolzen 20 durch eine (nicht dargestellte) Bohrung in der Halteschiene 80 geführt wird. Dann werden die Feder 50, das Stützelement 40 und das Hammerkopfelement 30 auf den Bolzen 20 aufgefädelt bzw. geschraubt und so ausgerichtet bzw. vorbereitet, dass sich das Hammerkopfelement 30 in der Montageposition M befindet. Dabei werden zunächst alle Befestigungselemente 10 an dem Bauteil 90 oder seiner Halteschiene 80 angebracht.

Danach wird das Bauteil 90 an den Montageschienen 70 angeordnet. Dabei sind für den Monteur üblicherweise nur die Kopfabschnitte 21 der Bolzen 20 der einzelnen Befestigungselemente 10 sichtbar. Feder 50, Stützelement 40, und vor allem Hammerkopfelemente 30 sowie der Montageschlitz 71 der Montageschiene 70 werden durch das Bauteil 90 bzw. die Halteschiene 80 verdeckt.

Ein besonderer Vorteil der erfindungsgemäßen Lösung ist es nun, dass die Befestigungselemente 10 nur in einer bestimmten Position in die Montageschiene 70 einsetzbar sind, nämlich so, dass das Hammerkopfelement 30 parallel zum Montageschlitz 71 verläuft. Diese Position ist für den Monteur zwar nicht sichtbar, er kann sie jedoch ohne weiteres ertasten. Dazu dreht er beispielsweise die Befestigungselemente 10 solange um die Achse A des Bolzens 20 bis er spürt, dass sie in den Montageschlitz 71 eingegriffen haben. Dank der erfindungsgemäßen Lösung kann er dabei in jedem Fall sicher sein, dass sich die Befestigungselemente 10 insbesondere die Hammerkopfelemente 30 dann in der gewünschten Ausgangsstellung befinden, nämlich der Montageposition M, sobald er das Eingreifen gespürt hat. Um anschließend die derart ausgerichteten Befestigungselemente 10 an der Montageschiene 70 vorzufixieren, muss der Monteur nur noch auf den Bolzen 20 drücken, wodurch das Hammerkopfelement 30 - wie oben dargestellt - automatisch in seine Klemmposition K gelangt. Lässt der Monteur den Bolzen 20 wieder los, wird das Befestigungselement 10 dank der Kraft der Feder 50 in der so erreichten Position unmittelbar festgehalten. Mithin kann auch das Festklemmen des Befestigungselementes 10 auch ohne Sicht auf die Montageschiene 70 oder die unterhalb der Halteschiene 80 bzw. des Bauteils 90 angeordneten Teile des Befestigungselementes 10 einfach und zuverlässig erfolgen.

Man erkennt nun einen weiteren Vorteil der erfindungsgemäßen Lösung. Bekannterweise ist es bei der gleichzeitigen Verwendung mehrerer Befestigungselemente 10 zumeist notwendig, die Position der Befestigungselemente 10 nach einem ersten Vormontieren nochmals in geringem Maß zu verändern, um eine optimale Feinausrichtung zu erreichen. Dies kann hier nun besonders einfach geschehen, indem man erneut einen leichten Druck auf den Bolzen 20 ausübt und so die Klemmung ein wenig löst. Das Befestigungselement 10 ist dadurch entlang des Montageschlitzes 71 verschiebbar. Es kann dabei rasch und bequem wie gewünscht ausgerichtet werden. Dabei verhindern die Schenkel 43 der ersten Sicherungselemente 41, dass das Hammerkopfelement 30 ungewollt in eine Position zurückgedreht wird, in der es möglicherweise wieder aus der Montageschiene herausfallen könnte. Stattdessen verbleibt das Hammerkopfelement 30 auch beim Feinausrichten mit geringem Spiel in der Klemmposition K. Eine zuverlässige Klemmung ist daher stets gegeben, wobei keinerlei Sicht auf den Klemmbereich erforderlich ist.

Die Erfindung ist nicht auf eine der vorbeschriebenen Ausführungsformen beschränkt, sondern in vielfältiger Weise abwandelbar.

So ist es beispielsweise denkbar, dass das Hammerkopfelement 30 fest mit dem Bolzen 20 verbunden ist, so dass der Bolzen eine Hammerkopfschraube ist. Der Kopfabschnitt 21 des Bolzens 20 kann dann beispielsweise eine Schraubenmutter oder ein ähnliches Bauteil sein.

Denkbar ist auch, dass als Verdrehsicherung 49 nur zwei erste oder nur zwei zweite oder nur ein erstes und nur ein zweites Sicherungselement 41, 42 dienen.

Man erkennt, dass bei einem Befestigungselement 10 zur Befestigung von Bauteilen an einer einen Montageschlitz 71 aufweisenden Montageschiene 70, wobei der Montageschlitz 71 von zwei Seitenflanken 72 begrenzt wird, umfassend einen Bolzen 20, ein mit dem Bolzen 20 verbundenes Hammerkopfelement 30, ein Stützelement 40 und eine Feder 50, die sich zwischen dem Stützelement 40 und einem am Bolzen 20 ausgebildeten Kopfabschnitt 21 abstützt, wobei das Hammerkopfelement 30 in einer Montageposition M in den Montageschlitz 71 der Montageschiene 70 einsetzbar und entgegen der Feder 50 in die Montageschiene 70 eindrückbar ist und wobei das Hammerkopfelement 30 derart zwischen der Montageposition M und einer Klemmposition K verschwenkbar ist, dass das Hammerkopfelement 30 in der Klemmposition K die Seitenflanken 72 des Montageschlitzes 70 hintergreift, ein besonderer Vorteil darin liegt, dass das Stützelement 40 beim Eindrücken des Hammerkopfelementes 30 in die Montageschiene 70 ein Drehmoment D auf das Hammerkopfelement 30 ausübt. Dabei ist es besonders günstig, wenn das Hammerkopfelement 30 durch das Drehmoment D von der Montageposition M in die Klemmposition K verschwenkt wird und wenn die Schwenkbewegung des Hammerkopfelementes 30 von der Montageposition M in die Klemmposition K innerhalb der Montageschiene 70 begrenzt ist. Zweckmäßig ist daher die Klemmposition K des Hammerkopfelementes 30 durch einen in der Schwenkrichtung am Stützelement 40 und/oder an der Wandung 73 der Montageschiene 70 ausgebildeten Anschlag vorbestimmt. Zweckmäßig ist das Stützelement 40 verdrehsicher in den Montageschlitz 71 einsetzbar.

Man erkennt weiter, dass das Stützelement 40 mit Vorteil wenigstens einen Halteflügel 46 aufweist, der im montierten Zustand auf den Seitenflanken 72 des Montageschlitzes 71 aufliegt und dass an dem Stützelement 40 eine Verdrehsicherung 49 ausgebildet ist, wobei die Verdrehsicherung 49 in den Montageschlitz 71 eingreift. Vorteilhaft wird außerdem das Hammerkopfelement 30 in der Montageposition M durch die Verdrehsicherung 49 gehalten.

Man erkennt weiter, dass es günstig ist, wenn die Verdrehsicherung 49 wenigstens ein erstes Sicherungselement 41 und wenigstens ein zweites Sicherungselement 42 aufweist, wobei jedes erste Sicherungselement 41 einen Schenkel 43 aufweist, der das Hammerkopfelement 30 in der Montageposition M untergreift und wobei das erste Sicherungselement 41 beim Eindrücken des Hammerkopfelementes 30 in die Montageschiene 70 das Drehmoment D auf das Hammerkopfelement 30 ausübt.

Vorteilhaft ist das Hammerkopfelement 30 eine Hammerkopfmutter ist, die mit dem Bolzen 20 durch ein Gewinde verbunden ist. Außerdem ist es günstig, wenn an dem Stützelement 40 eine Führung 47 für den Bolzen 20 ausgebildet ist, wenn an dem Stützelement 40 eine Führung 51 für die Feder 50 ausgebildet ist und wenn die Führung 47 für den Bolzen 20 die Führung 51 für die Feder 50 bildet.

### Bezugszeichenliste

- A: Achse des Bolzens
- B: Breite des Hammerkopfelementes
- B': Breite der Verdrehsicherung
- D: Drehmoment / Richtung des Drehmomentes
- K: Klemmposition
- L: Länge des Hammerkopfelementes
- M: Montageposition
- V: Breite des Montageschlitzes

- 10: Befestigungselement

- 20: Bolzen
- 21: Kopfabschnitt
- 22: Ausnehmung
- 23: Anschlag

- 30: Hammerkopfelement
- 31: Ecke
- 32: Rundung
- 33: Fläche
- 34: lange Seite
- 35: kurze Seite
- 36: Ausnehmung

- 40: Stützelement
- 401: Unterseite
- 402: Oberseite
- 41: erstes Sicherungselement
- 42: zweites Sicherungselement

- W: Innenbreite der Montageschiene
- P': Richtung
- P: Richtung
- S: parallel zum Montageschlitz verlaufende Seite
- S': quer zum Montageschlitz verlaufende Seite
- R: Richtung
- R': Richtung

- 43: Schenkel
- 44: Beuge
- 45: Abschnitt
- 46: Halteflügel
- 47: Kragen/Führung für den Bolzen
- 48: Ausnehmung
- 49: Verdrehsicherung

- 50: Feder
- 51: Kragen/Führung für die Feder

- 70: Montageschiene
- 71: Montageschlitz
- 72: Seitenflanken
- 721: Unterseite
- 73: Wandung

- 80: Halteschiene

- 90: Bauteil/ Panel

## Patentansprüche

1. Befestigungselement (10) zur Befestigung von Bauteilen an einer einen Montageschlitz (71) aufweisenden Montageschiene (70), wobei der Montageschlitz (71) von zwei Seitenflanken (72) begrenzt wird, umfassend einen Bolzen (20), ein mit dem Bolzen (20) verbundenes Hammerkopfelement (30), ein Stützelement (40), welches dazu vorgesehen ist, sich auf den Seitenflanken (72) der Montageschiene (70) abzustützen, und eine Feder (50), die sich an dem Stützelement (40) und einem am Bolzen (20) ausgebildeten Kopfabschnitt (21) abstützt, wobei das Hammerkopfelement (30) in einer Montageposition (M) in den Montageschlitz (71) der Montageschiene (70) einsetzbar und entgegen der Feder (50) in die Montageschiene (70) eindrückbar ist, und wobei das Hammerkopfelement (30) derart zwischen der Montageposition (M) und einer Klemmposition (K) verschwenkbar ist, dass das Hammerkopfelement (30) in der Klemmposition (K) die Seitenflanken (72) des Montageschlitzes (70) hintergreift, **dadurch gekennzeichnet, dass** das Stützelement (40) beim Eindrücken des Hammerkopfelementes (30) ein Drehmoment (D) auf das Hammerkopfelement (30) ausübt

2. Befestigungselement nach Anspruch 1, **dadurch gekennzeichnet, dass** das Hammerkopfelement (30) durch das Drehmoment (D) von der Montageposition (M) in die Klemmposition (K) verschwenkt wird.

3. Befestigungselement nach Anspruch 1 oder 2, **dadurch gekennzeichnet, dass** die Schwenkbewegung des Hammerkopfelementes (30) von der Montageposition (M) in die Klemmposition (K) innerhalb der Montageschiene (70) begrenzt ist.

4. Befestigungselement nach einem der Ansprüche 1 bis 3, **dadurch gekennzeichnet, dass** die Klemmposition (K) des Hammerkopfelementes (30) durch einen in der Schwenkrichtung am Stützelement (40) und/oder an der Wandung (73) der Montageschiene (70) ausgebildeten Anschlag vorbestimmt ist.

5. Befestigungselement nach einem der Ansprüche 1 bis 4, **dadurch gekennzeichnet, dass** das Stützelement (40) verdrehsicher in den Montageschlitz (71) einsetzbar ist.

6. Befestigungselement nach einem der Ansprüche 1 bis 5, **dadurch gekennzeichnet, dass** das Stützelement (40) wenigstens einen Halteflügel (46) aufweist, der im montierten Zustand auf den Seitenflanken (72) des Montageschlitzes (71) aufliegt.

7. Befestigungselement nach einem der Ansprüche 1 bis 6, **dadurch gekennzeichnet, dass** an dem Stützelement (40) eine Verdrehsicherung (49) ausgebildet ist.

8. Befestigungselement nach Anspruch 7, **dadurch gekennzeichnet, dass** die Verdrehsicherung (49) in den Montageschlitz (71) eingreift.

9. Befestigungselement nach einem der Ansprüche 7 oder 8, **dadurch gekennzeichnet, dass** das Hammerkopfelement (30) in der Montageposition (M) durch die Verdrehsicherung (49) gehalten wird.

10. Befestigungselement nach einem der Ansprüche 7 bis 9, **dadurch gekennzeichnet, dass** die Verdrehsicherung (49) wenigstens ein erstes Sicherungselement (41) und wenigstens ein zweites Sicherungselement (42) aufweist.

11. Befestigungselement nach Anspruch 10, **dadurch gekennzeichnet, dass** jedes erste Sicherungselement (41) einen Schenkel (43) aufweist, der das Hammerkopfelement (30) in der Montageposition (M) untergreift.

12. Befestigungselement nach einem der Ansprüche 10 oder 11, **dadurch gekennzeichnet, dass** das erste Sicherungselement (41) beim Eindrücken des Hammerkopfelementes (30) in die Montageschiene (70) das Drehmoment (D) auf das Hammerkopfelement (30) ausübt.

13. Befestigungselement nach einem der Ansprüche 1 bis 12, **dadurch gekennzeichnet, dass** das Hammerkopfelement (30) eine Hammerkopfmutter ist, die mit dem Bolzen (20) durch ein Gewinde verbunden ist.

14. Befestigungselement nach einem der Ansprüche 1 bis 13, **dadurch gekennzeichnet, dass** an dem Stützelement (40) eine Führung (47) für den Bolzen (20) ausgebildet ist.

15. Befestigungselement nach einem der Ansprüche 1 bis 14, **dadurch gekennzeichnet, dass** an dem Stützelement (40) eine Führung (51) für die Feder (50) ausgebildet ist.

16. Befestigungselement nach einem der Ansprüche 1 bis 15, **dadurch gekennzeichnet, dass** die Führung (47) für den Bolzen (20) die Führung (51) für die Feder (50) bildet.

## Claims

1. A fastening element (10) for fastening components to a mounting rail (70) comprising a mounting slot (71), wherein the mounting slot (71) is delimited by two lateral flanks (72), comprising a bolt (20), a hammer head element (30) connected to the bolt (20), a support element (40) which is supported on the lateral flanks (72) of the mounting rail (70), and a spring (50) which bears against the support element (40) and against a head section (21) formed on the bolt (20), wherein the hammer head element (30) can be inserted, in a mounting position (M), into the mounting slot (71) in the mounting rail (70), and can be pressed into the assembly rail (70) against the spring (50), and wherein the hammer head element (30) can be swivelled between the mounting position (M) and a clamping position (K) such that the hammer head element (30), in the clamping position (K), engages behind the lateral flanks (72) of the mounting slot (70), **characterized in that** the support element (40) exerts a torque (D) onto the hammer head element (30) when the hammer head element (30) is pressed inward.

2. The fastening element according to claim 1, **characterized in that** the hammer head element (30) is swivelled from the mounting position (M) into the clamping position (K) by the torque (D).

3. The fastening element according to claim 1 or 2, **characterized in that** the swivel motion of the hammer head element (30) from the mounting position (M) into the clamping position (K) is limited within the mounting rail (70).

4. The fastening element according to one of the claims 1 to 3, **characterized in that** the clamping position (K) of the hammer head element (30) is predetermined by a stop formed on the support element (40) in the swivel direction, and/or on the wall (73) of the mounting rail (70).

5. The fastening element according to one of the claims 1 to 4, **characterized in that** the support element (40) can be inserted non-rotatably into the mounting slot (71).

6. The fastening element according to one of the claims 1 to 5, **characterized in that** the support element (40) comprises at least one retaining wing (46) which, in the installed state, rests on the lateral flanks (72) of the mounting slot (71).

7. The fastening element according to one of the claims 1 to 6, **characterized in that** a rotation-prevention means (49) is formed on the support element (40).

8. The fastening element according to claim 7, **characterized in that** the rotation-prevention means (49) engages in the mounting slot (71).

9. The fastening element according to one of the claims 7 or 8, **characterized in that** the hammer head element (30) is held in the mounting position (M) by the rotation-prevention means (49).

10. The fastening element according to one of the claims 7 to 9, **characterized in that** the rotation-prevention means (49) comprises at least one first retaining element (41) and at least one second retaining element (42).

11. The fastening element according to claim 10, **characterized in that** each first retaining element (41) comprises a leg (43) whch, in the mounting position (M), engages in the underside of the hammer head element (30).

12. The fastening element according to one of the claims 10 or 11, **characterized in that** the first retaining element (41) exerts the torque (D) onto the hammer head element (30) when the hammer head element (30) is pressed into the mounting rail (70).

13. The fastening element according to one of the claims 1 to 12, **characterized in that** the hammer head element (30) is a hammer head nut which is connected to the bolt (20) by a thread.

14. The fastening element according to one of the claims 1 to 13, **characterized in that** a guide (47) for the bolt (20) is formed on the support element (40).

15. The fastening element according to one of the claims 1 to 14, **characterized in that** a guide (51) for the spring (50) is formed on the support element (40).

16. The fastening element according to one of the claims 1 to 15, **characterized in that** the guide (47) for the bolt (20) is the guide (51) for the spring (50).

## Revendications

1. Élément de fixation (10) pour la fixation de pièces de construction sur un rail de montage (70) comportant une fente de montage (71), dans lequel la fente de montage (71) est délimitée par deux flancs latéraux (72), comprenant un boulon (20), un élément à embase rectangulaire (30) relié au boulon (20), un élément d'appui (40) prévu pour s'appuyer sur les flancs latéraux (72) du rail de montage (70), et un ressort (50) s'appuyant sur l'élément d'appui (40) et sur une section de tête (21) formée sur le boulon (20), dans lequel l'élément à embase rectangulaire (30) peut être inséré dans une position de montage (M) dans la fente de montage (71) du rail de montage (70) et enfoncé contre le ressort (50) dans le rail de montage (70), et dans lequel l'élément à embase rectangulaire (30) peut être pivoté de telle manière entre la position de montage (M) et une position de serrage (K), que dans la position de serrage (K), l'élément à embase rectangulaire (30) vient en prise derrière les flancs latéraux (72) du rail de montage (70), **caractérisé en ce que** l'élément d'appui (40) exerce un couple de rotation (D) sur l'élément à embase rectangulaire (30), lors de l'enfoncement de l'élément à embase rectangulaire (30).

2. Élément de fixation selon la revendication 1, **caractérisé en ce que** l'élément à embase rectangulaire (30) est pivoté de la position de montage (M) vers la position de serrage (K) par le couple de rotation (D).

3. Élément de fixation selon la revendication 1 ou 2, **caractérisé en ce que** le mouvement de pivotement de l'élément à embase rectangulaire (30) de la position de montage (M) vers la position de serrage (K) à l'intérieur du rail de montage (70) est délimité.

4. Élément de fixation selon l'une des revendications 1 à 3, **caractérisé en ce que** la position de serrage (K) de l'élément à embase rectangulaire (30) est prédéterminée par une butée formée sur l'élément d'appui (40) dans le sens de pivotement, et/ou sur la paroi (73) du rail de montage (70).

5. Élément de fixation selon l'une des revendications 1 à 4, **caractérisé en ce que** l'élément d'appui (40) peut être inséré sans possibilité de rotation dans la fente de montage (71).

6. Élément de fixation selon l'une des revendications 1 à 5, **caractérisé en ce que** l'élément d'appui (40) comporte au moins une aile de maintien (46) reposant sur les flancs latéraux (72) de la fente de montage (71) à l'état monté.

7. Élément de fixation selon l'une des revendications 1 à 6, **caractérisé en ce qu'**un moyen de blocage en rotation (49) est formé sur l'élément d'appui (40).

8. Élément de fixation selon la revendication 7, **caractérisé en ce que** le moyen de blocage en rotation (49) s'engage dans la fente de montage (71).

9. Élément de fixation selon l'une des revendications 7 ou 8, **caractérisé en ce que** dans la position de montage (M), l'élément à embase rectangulaire (30) est maintenu par le moyen de blocage en rotation (49).

10. Élément de fixation selon l'une des revendications 7 à 9, **caractérisé en ce que** le moyen de blocage en rotation (49) comporte au moins un premier élément de blocage (41) et au moins un deuxième élément de blocage (42).

11. Élément de fixation selon la revendication 10, **caractérisé en ce que** chaque premier élément de blocage (41) comporte une branche (43) venant en prise sous l'élément à embase rectangulaire (30) dans la position de montage (M).

12. Élément de fixation selon l'une des revendications 10 ou 11, **caractérisé en ce que** le premier élément de blocage exerce le couple de rotation (D) sur l'élément à embase rectangulaire (30) lors de l'enfoncement de l'élément à embase rectangulaire (30) dans le rail de montage (70).

13. Élément de fixation selon l'une des revendications 1 à 12, **caractérisé en ce que** l'élément à embase rectangulaire (30) est un écrou à embase rectangulaire, relié au boulon (20) par un filetage.

14. Élément de fixation selon l'une des revendications 1 à 13, **caractérisé en ce qu'**un guide (47) est formé sur l'élément d'appui (40) pour le boulon (20).

15. Élément de fixation selon l'une des revendications 1 à 14, **caractérisé en ce qu'**un guide (51) est formé sur l'élément d'appui (40) pour le ressort (50).

16. Élément de fixation selon l'une des revendications 1 à 15, **caractérisé en ce que** le guide (47) pour le boulon (20) forme le guide (51) pour le ressort (50).
